# EUROPÄISCHE PATENTSCHRIFT

(11) **EP 0 891 714 B1**
(45) Veröffentlichungstag und Bekanntmachung des Hinweises auf die Patenterteilung: **29.11.2000**
(21) Anmeldenummer: 98109812.2
(22) Anmeldetag: 29.05.1998
(51) Int. Cl.: A23B 7/005

(54) **Verfahren und Vorrichtung zum Entkeimen von Einzelportionen**
Method and apparatus for sterilizing unit portions
Procédé et appareil de stérilisation de portions unitaires

(30) Priorität: 16.07.1997 DE 19730537; 13.02.1998 DE 19805773
(43) Veröffentlichungstag der Anmeldung: 20.01.1999
(73) Patentinhaber: SIG Combibloc GmbH & Co. KG, 52441 Linnich (DE)
(72) Erfinder: Friedrich, Peter, Dr., 52441 Linnich (DE); Bauer, Jens, 01465 Langebrück (DE)
(74) Vertreter: Cohausz & Florack

(56) Entgegenhaltungen:
- EP-A- 0 269 257
- EP-A- 0 601 952
- US-A- 4 636 395
- US-A- 5 320 856

## Beschreibung

Die Erfindung betrifft ein Verfahren zum Sterilisieren/Pasteurisieren eines gewichtsmäßig vorportionierten Gemüse- bzw. Fruchtproduktes. Das Verfahren umfaßt die Schritte Vorsortieren, Ausrichten, Wiegen, Sterilisieren, Kühlen und Abfüllen.

Aus dem Stand der Technik sind Verfahren und Vorrichtungen zum Sterilisieren von schüttbaren Produkten bekannt, beispielsweise zeigt das EP 0 196 464 A3 ein Verfahren zum Sterilisieren von pulverförmigen und/oder granulösen Substanzen mittels Heißluft. Im EP 0 269 257 A2 wird die batchweise Entkeimung von granulösen und blättrigen Gewürzen in einem Rührwerkmischer mittels Dampf beschrieben.

Ein weiteres Batchverfahren wird in der EP 0 532 839 B1 beschrieben, wo die schüttbaren Güter in einem Behältnis mit Dampf erhitzt und anschließend durch Vakuumkühlung abgekühlt werden. Eine aseptische Vorgehensweise ist nicht vorgesehen.

Alle zuvor genannten Entkeimungsverfahren von Schüttgütern arbeiten diskontinuierlich im Batchverfahren ohne anschließende aseptische Übergabe des entkeimten Produktes an eine aseptischarbeitende Füllstation. Ein weiterer Nachteil ist die Tatsache, daß alle bislang bekannten Verfahren eine relativ starke mechanische und thermische Belastung auf das Sterilisiergut ausüben oder durch Druckwechsel eine Zerstörung der Produkte verursachen.

Ein kontinuierlich arbeitendes Verfahren und eine entsprechende Vorrichtung zum Sterilisieren von Lebensmitteln ist aus der DE 1 692 224 A bekannt. Dort erfolgt jedoch die Sterilisation nach dem Abfüllen des Produktes in seine endgültige Verpackung. Die befüllten, noch teilweise offenen Behältnisse werden einem Autoklaven zugeführt und in demselben verschlossen. Ein weiterer Nachteil ist das Vorhandensein von Prozeßwasser in der Dose.

Aus der Konservenherstellung ist es auch bekannt, die Produkte erst abzufüllen, dann die Behältnisse fertig zu verschließen und erst abschließend die Sterilisation/Pasteurisation durchzuführen (DE 195 20 066 A1).

Schließlich ist der EP 0 570 953 A2 ein Verfahren und eine Vorrichtung zum Sterilisieren von Tomatenmark bekannt. Auch bei diesem, kontinuierlich arbeitenden Verfahren spielt die auf das Produkt ausgeübte mechanische Belastung keine Rolle. Da hier kein Portionieren vor der Sterilisation stattfindet, und daher auch kein gekochtes - weiches - Produkt abgefüllt wird, muß der Faktor "Produktschonung" dort überhaupt nicht berücksichtigt werden.

Aufgabe der Erfindung ist es daher, die Verfahrensschritte Sterilisieren, Abkühlen und Transportieren so qualitätsschonend, schnell und kontinuierlich durchzuführen, daß z. B. Gemüse wie grüne Bohnen, Erbsen, Rosenkohl etc. oder auch Früchte wie z.B. Pfirsiche, Kirschen, Fruchtcocktails etc. ohne nennenswerte Zerstörung und ohne nennenswerte Sterilisationsflüssigkeiten anschließend aseptisch abgefüllt werden können.

Die Erfindung wird bezüglich ihres Verfahrens durch folgende kontinuierlich ablaufende Verfahrensschritte gelöst:
- Vorsortieren und ggf. Ausrichten der Ausgangsprodukte,
- Portionieren in die jeweilige Abfüllmenge,
- Übergabe jeder Einzelportion in ein einseitig offenes Behältnis,
- Transport des Behältnisses in eine Druckkammer,
- Einblasen von Dampf in die geschlossene Druckkammer mit der gewünschten Sterilisationstemperatur für eine gewisse Zeitspanne zur Sterilisation/Pasteurisation,
- Unterbrechen der Dampfzufuhr und Aufrechterhaltung des Druckes mittels Sterilluft, Schutzgas oder Kühlwasser,
- indirektes und/oder direktes Abkühlen des Produktes bis auf Werte ≤ 100 °C unter konstantem Druck,
- Öffnen der Druckkammer,
- Entnahme des Behältnisses und
- aseptisches Entleeren des Behältnisses in eine aseptische Verpackung.

Vorrichtungsmäßig erfolgt die Lösung der Aufgabe dadurch, daß eine Sortiereinheit, ggf. eine Ausrichteeinheit, eine Portioniereinheit, wenigstens eine Druckkammer als Sterilisations-/Pasteurationseinheit und Kühleinheit mit entsprechenden druckdichten Schleusen sowie durch eine Mehrzahl verschließbarer Behältnisse, die zur Aufnahme einer vorgegebenen Menge des Ausgangsproduktes dienen in der Druckkammer arretierbar sind und die einzelnen Einheiten nacheinander durchlaufen.

Bevorzugt läßt die Produktschüttung im Behältnis eine gleichzeitige und damit gleichmäßige Erhitzung aller Produktstücke mit Dampf oder überhitztem Wasser zu. Nach einer bevorzugten Ausgestaltung der Erfindung erfolgt die Kühlung unter Druck durch sukzessives Kühlen mittels Kühlmedium mit einem Temperaturgradienten von maximal T = 10° K. Diese direkte Kühlung kann dabei mittels sterilem Kühlwasser, sterilen flüssigen/gasförmigen Schutzgasen wie N_{2,} CO₂ od. dgl. einzeln oder nacheinander erfolgen, ohne nennenswerte Flüssigkeitsrückstände.

Zweckmäßigerweise erfolgt die Kühlung bis auf ≤ 100 °C unter konstant gleichem Druck.

Eine weitere Lehre der Erfindung sieht vor, daß die Übergabe der Behältnisse an die Füllstation drucklos und aseptisch erfolgt. Dabei können vor der aseptischen Abfüllung Zusatzstoffe wie Öl, Butter, Gewürze/Zuckerlösungen od. dgl. steril injiziert werden.

Besonders zweckmäßig ist es, wenn das Sterilisieren der Verpackungen unmittelbar vor dem Befüllen mit dem sterilisierten Produkt erfolgt.

Die notwendige Sterilisations-/Pasteurisationszeit und/oder die Kühlzeit kann über die Geschwindigkeit der die einzelnen Stationen durchlaufenden Behältnisse bzw. über die Geschwindigkeit der Abfüllanlage eingestellt werden.

Alternativ können bei der erfindungsgemäßen Vorrichtung die Einheiten in einer Reihe (Längsläufer) oder aber auch kreisförmig (Rundläufer) angeordnet sein. Bevorzugt sind die zur Sterilisation eingesetzten Behältnisse von einer Seite befüllbar und auf der anderen Seite entleerbar. Eine weitere Leere der Erfindung sieht dazu vor, daß die Behältnisse als oben offene Körbe aus Lochblech ausgebildet sind und daß jeder Korb einen zum Öffnen schwenkbaren Boden aufweist. Bevorzugt ist der Boden entlang einer Längsseite am Behältnis schwenkbar angeordnet und weist zur seitlichen Produktführung einen U-förmigen Querschnitt auf.

Um nun ein zuverlässiges, schnelles und produktschonendes "trockenes" Abfüllen des Produktes in die aseptische Packung zu gewährleisten, sind die Abmessungen des Behältnisses geringfügig kleiner als die Abmessungen der Verpackung und/oder erweitern sich die Behältnisse leicht konisch nach unten. Alternativ oder zusätzlich können auch das Behältnis und/oder die gerade befüllte Verpackung von einem Vibrator in Schwingung versetzt werden, um den Abfüllvorgang zu erleichtern.

Die jeweils mit Dampf bzw. einem Kühlmedium beaufschlagbaren Elemente (Behältnisse bzw. Druckkammer/n) sind bevorzugt mit einer Druck-/Temperaturüberwachung ausgestattet, welcher wiederum vorzugsweise eine Regelung aufweist. Ein Steuer- und Regelkreis kann zum Erreichen eines automatischen Ablaufs vorgesehen sein.

Zweckmäßigerweise ist die gesamte erfindungsgemäße Vorrichtung einer aseptischen Abfüllmaschine vorgeschaltet, so daß auch die aseptische Dosierung in die Abfüllstation von der aseptischen Abfüllmaschine gesteuert werden kann.

Die Erfindung wird nachfolgend anhand einer lediglich ein Ausführungsbeispiel darstellenden Zeichnung näher erläutert. In der Zeichnung zeigen
- Fig. 1: eine erfindungsgemäße Vorrichtung zum Sterilisieren im schematischen Querschnitt,
- Fig. 2: den Füllbereich der erfindungsgemäßen Vorrichtung vor dem Entleeren des Behältnisses,
- Fig. 3: den Füllbereich der erfindungsgemäßen Vorrichtung nach dem Entleeren des Behältnisses und
- Fig. 4: eine Prinzipdarstellung eines als Rundläufer ausgebildeten Autoklaven.

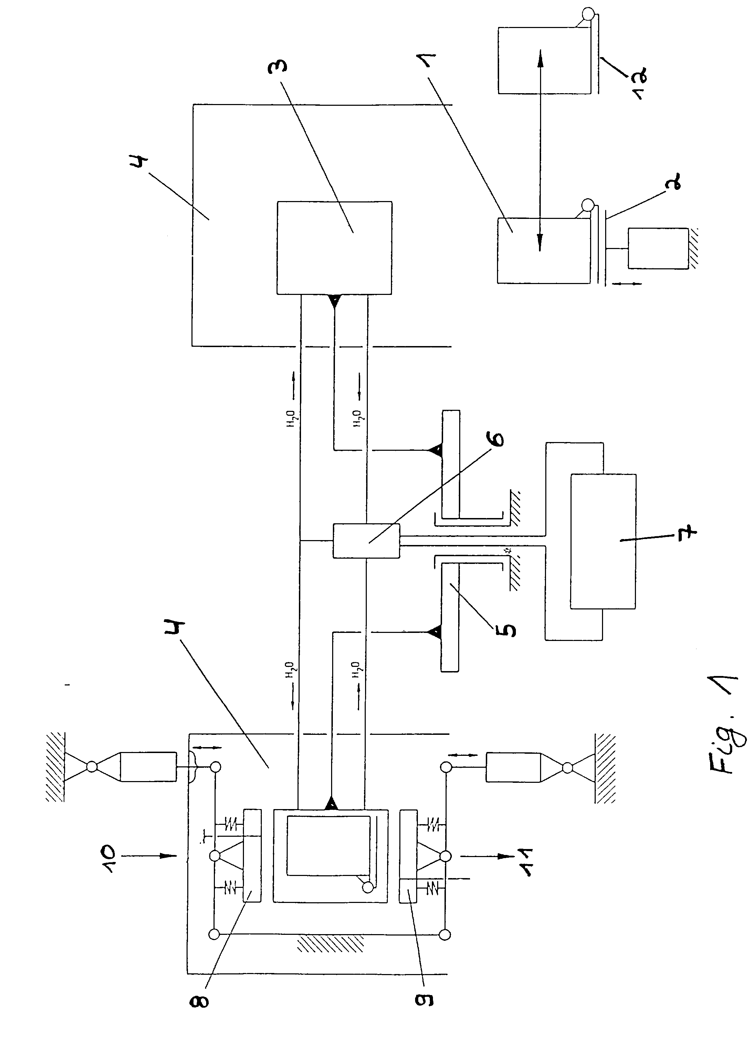

Fig. 1 zeigt einen schematischen Querschnitt der erfindungsgemäßen Vorrichtung. Ein mit dem zu sterilisierenden Produkt gefüllter Korb (Behältnis) 1 wird mittels einer Hubstation 2 in einen Behälter (Druckkammer) 3 verbracht und dort mit nicht dargestellten Befestigungsmitteln arretiert. Der Behälter 3 befindet sich dabei in einer im dargestellten und insoweit bevorzugten Ausführungsbeispiel ringförmigen Sterilkammer 4, wo er mittels eines Drehantriebes 5 bewegt werden kann. Zum Sterilisieren wird dabei Dampf oder erhitztes Wasser über einen Drehverteiler 6, der auch an einen Rückkühler 7 angeschlossen ist, aufgegeben. Auf der linken Seite der Sterilkammer 4 ist ein oberer Deckel (Schleuse) 8 und ein unterer Deckel (Schleuse) 9 dargestellt, um den Behälter 3 hermetisch abschließen zu können. Des weiteren ist mit dem Pfeil 10 ein Zulauf für Prozessmedien und mit dem Pfeil 11 ein Ablauf für Prozessmedien nur schematisch angedeutet. Auf diese Weise ist eine Aufrechterhaltung des Druckes mittels Sterilluft nach dem Unterbrechen der Dampf- bzw. Wassersterilisation und Einschaltung der externen Kühlung möglich. Vor dem Öffnen der Deckel 8, 9 erfolgt ein direktes Abkühlen des im Korb 1 sterilisierten Produktes auf die gewünschte Abfülltemperatur unter gleichzeitigem weiteren Verdrehen des Drehtellers.

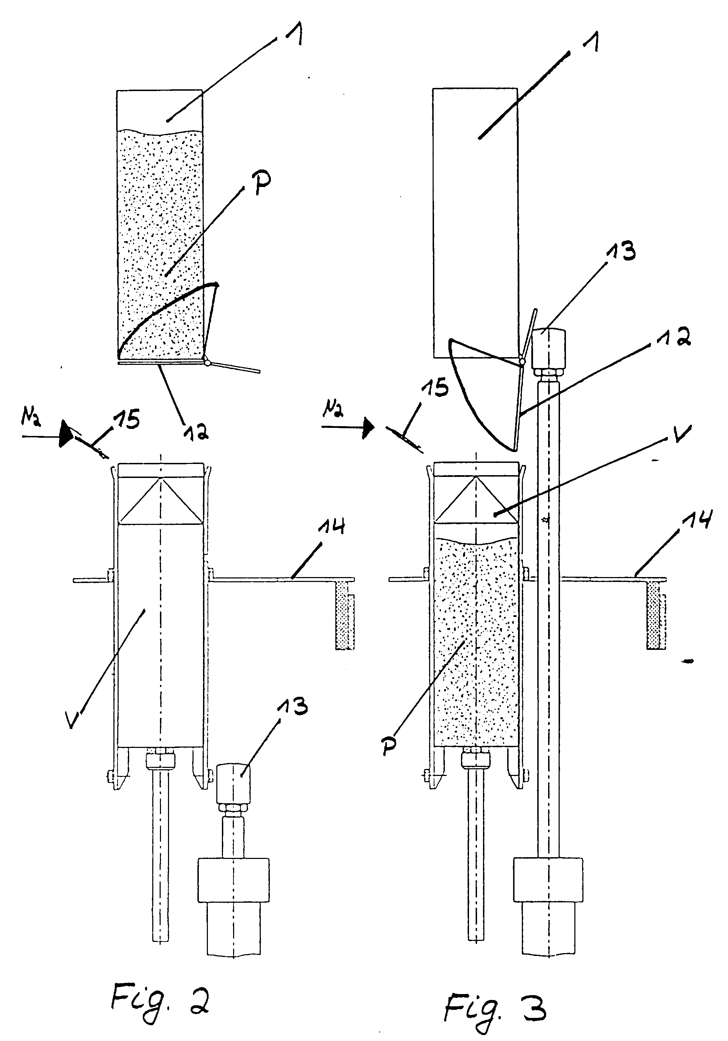

Fig. 2 und 3 zeigt die Abfüllstation schematisch im Querschnitt. Dabei ist der mit dem Produkt P gefüllte Korb 1 im Sterilbereich über einer Verpackung V positioniert. Man erkennt im unteren Bereich des Korbes 1 einen an diesem schwenkbar angebrachten Korbboden 12. Ein Stößel 13 wird von unten durch den nur angedeuteten Drehteller 14 bewegt und dient zur Öffnung des Korbbodens 12. Bevorzugt ist der Korbboden 12 mit einem U-förmigen Querschnitt versehen, so daß das Produkt P beim Einfüllen in die Verpackung V von drei Seiten geführt wird. Die Führung auf der vierten, in den Fig. 2 und 3 linken Seite erfolgt durch eine Düse 15, durch die Stickstoff N₂ zur Sauerstoffverdrängung in der Verpackung V während des Einfüllvorganges eingeleitet wird. So kann mit Hilfe der Düse 15 nicht nur der Sauerstoffanteil in der Verpackung V reduziert, sondern auch gleichzeitig die sichere Führung des Produktes P gewährleistet werden.

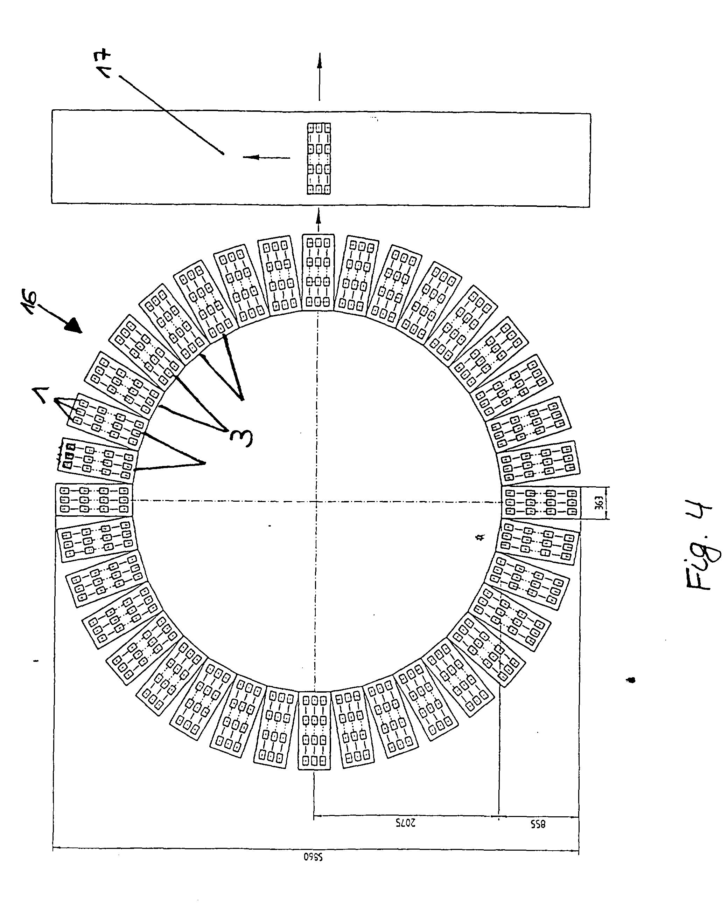

Fig. 4 zeigt schließlich noch schematisch einen kontinuierlich arbeitenden Rotationssterilisator 16 in der Draufsicht, wobei in jedem Behälter 3 zwölf Körbe 1 angeordnet sind, so daß jeweils eine Charge von zwölf Verpackungen V gleichzeitig mit Produkt in einer aseptischen Füllmaschine 17 befüllt werden können. Ein solcher Rotationssterilisator 16 kann mehrere Ebenen aufweisen, um die Anzahl der zu sterilisierenden Behältnisse 1 und damit die Taktanzahl der Füllmaschine 17 zu erhöhen.

## Patentansprüche

1. Verfahren zum Sterilisieren/Pasteurisieren eines Gemüse- bzw. Fruchtproduktes mit den folgenden, kontinuierlich ablaufenden Verfahrensschritten:
- Vorsortieren und ggf. Ausrichten der Ausgangsprodukte,
- Portionieren in die jeweilige Abfüllmenge,
- Übergabe jeder Einzelportion in ein einseitig offenes Behältnis,
- Transport des Behältnisses in eine Druckkammer, Einblasen von Dampf in die geschlossene Druckkammer mit der gewünschten Sterilisationstemperatur für eine gewisse Zeitspanne zur Sterilisation/Pasteurisation,
- Unterbrechen der Dampfzufuhr und Aufrechterhaltung des Druckes mittels Sterilluft, Schutzgas oder Kühlwasser,
- indirektes und/oder direktes Abkühlen des Produktes bis auf Werte ≤ 100 °C unter konstantem Druck,
- Öffnen der Druckkammer,
- Entnahme des Behältnisses und
- aseptisches Entleeren des Behältnisses in eine aseptische Verpackung.

2. Verfahren nach Anspruch 1,
**dadurch gekennzeichnet, daß** die Produktschüttung im Behältnis eine gleichzeitige Erhitzung aller Produktstücke mit Dampf zuläßt.

3. Verfahren nach Anspruch 1 oder 2,
**dadurch gekennzeichnet, daß** die Sterilisation/Pasteurisation mit Dampf oder überhitztem Wasser erfolgt.

4. Verfahren nach einem der Ansprüche 1 bis 3,
**dadurch gekennzeichnet, daß** die Kühlung unter Druck durch sukzessives Kühlen mittels Kühlmedium mit einem Temperaturgradienten von max. T = 10° K erfolgt.

5. Verfahren nach einem der Ansprüche 1 bis 4,
**dadurch gekennzeichnet, daß** die direkte Kühlung mittels sterilem Kühlwasser, sterilen flüssigen/gasförmigen Schutzgasen wie N₂, CO₂ od. dgl. einzeln oder nacheinander erfolgen kann.

6. Verfahren nach einem der Ansprüche 1 bis 5,
**dadurch gekennzeichnet, daß** die Kühlung bis auf ≤ 100 °C unter konstant gleichem Druck erfolgt.

7. Verfahren nach einem der Ansprüche 1 bis 6,
**dadurch gekennzeichnet, daß** die Übergabe der Behältnisse an die Füllstation drucklos und aseptisch erfolgt.

8. Verfahren nach einem der Ansprüche 1 bis 7,
**dadurch gekennzeichnet, daß** vor der aseptischen Abfüllung Zusatzstoffe wie Öl, Butter, Gewürze, Salz/Zuckerlösungen od. dgl. steril injiziert werden können.

9. Verfahren nach einem der Ansprüche 1 bis 8,
**dadurch gekennzeichnet, daß** das Sterilisieren der Verpackungen unmittelbar vor dem Befüllen mit dem sterilisierten Produkt erfolgt.

10. Verfahren nach einem der Ansprüche 1 bis 9,
**dadurch gekennzeichnet, daß** die notwendige Sterilisations-/Pasteurisationszeit und/oder die Kühlzeit über die Geschwindigkeit der Behältnisse bzw. über die Geschwindigkeit der Abfüllanlage eingestellt wird.

11. Vorrichtung zur Durchführung des Verfahrens nach einem der Ansprüche 1 bis 10,
**gekennzeichnet durch** eine Sortiereinheit, ggf. eine Ausrichteeinheit, eine Portioniereinheit, wenigstens eine Druckkammer (3) als Sterilisations-/Pasteurationseinheit und Kühleinheit mit entsprechenden druckdichten Schleusen (8, 9) sowie durch eine Mehrzahl verschließbarer Behältnisse (1), die zur Aufnahme einer vorgegebenen Menge des Ausgangsproduktes (P) dienen, in der Druckkammer (3) arretierbar sind und die einzelnen Einheiten nacheinander durchlaufen.

12. Vorrichtung nach Anspruch 11,
**dadurch gekennzeichnet, daß** die Einheiten kreisförmig angeordnet sind (Rundläufer), so daß die Behältnisse (1) nach ihrem Entleeren wieder der Portioniereinheit zum erneuten Befüllen zur Verfügung stehen.

13. Vorrichtung nach Anspruch 11,
**dadurch gekennzeichnet, daß** die Einheiten in einer Reihe angeordnet sind (Längsläufer) und daß die Behältnisse (1) nach der Übergabe des sterilisierten/pasteurisierten Produktes an die Füllstation wieder der Portioniereinheit zugeführt werden.

14. Vorrichtung nach einem der Ansprüche 11 bis 13,
**dadurch gekennzeichnet, daß** die Behältnisse (1) von einer Seite befüllbar und aus der anderen Seite entleerbar sind.

15. Vorrichtung nach Anspruch 14,
**dadurch gekennzeichnet, daß** die Behältnisse als oben offene Körbe (1) aus Lochblech ausgebildet sind.

16. Vorrichtung nach Anspruch 15,
**dadurch gekennzeichnet, daß**
jeder Korb (1) einen zum Öffnen schwenkbaren Boden (12) aufweist.

17. Vorrichtung nach Anspruch 16,
**dadurch gekennzeichnet, daß** der Boden (12) entlang einer Längsseite am Korb (1) schwenkbar angeordnet ist und zur seitlichen Produktführung einen U-förmigen Querschnitt aufweist.

18. Vorrichtung nach einem der Ansprüche 14 bis 17,
**dadurch gekennzeichnet, daß** die Abmessungen des Behältnisses (1) geringfügig kleiner als die Abmessungen der Verpackung (V) sind.

19. Vorrichtung nach einem der Ansprüche 14 bis 18,
**dadurch gekennzeichnet, daß** die Behältnisse (1) sich nach unten leicht konisch erweitern.

20. Vorrichtung nach einem der Ansprüche 11 bis 19,
**dadurch gekennzeichnet, daß** die jeweils mit Dampf (H₂O) bzw. einem Kühlmedium beaufschlagbaren Elemente (1 bzw. 3) mit einer Druck-/ Temperaturüberwachung ausgestattet sind.

21. Vorrichtung nach Anspruch 20,
**dadurch gekennzeichnet, daß** die Druck-/Temperaturüberwachung eine Regelung aufweist.

22. Vorrichtung nach einem der Ansprüche 11 bis 21,
**gekennzeichnet durch** einen Steuer- und Regelkreis zum Erreichen eines automatischen Ablaufs.

23. Vorrichtung nach Anspruch 22,
**dadurch gekennzeichnet, daß** die aseptische Dosierung in die Abfüllstation von der aseptischen Abfüllmaschine gesteuert wird.

24. Vorrichtung nach einem der Ansprüche 11 bis 23,
**dadurch gekennzeichnet, daß** zur Erleichterung jedes Entleerens des Behältnisses (1) in die aseptische Verpackung (V) das Behältnis (1) und/oder die Verpackung (V) mit einem Vibrator versehen ist.

## Claims

1. A process to sterilize/pasteurize a vegetable or fruit product that has the following continuous steps:
- Presorting and possibly aligning the initial products,
- Portioning the products into the respective amount,
- Transferring each individual portion into a container that is open on one side,
- Transporting the container into a pressure chamber, blowing steam into the closed pressure chamber at the desired sterilization temperature for a certain period to sterilize/pasteurize the products,
- Interrupting the supply of steam and maintaining the pressure with sterile air, inert gas or cooling water,
- Indirect and/or direct cooling the product to < 100 °C under constant pressure,
- Opening the pressure chamber,
- Removing the container, and
- Aseptically emptying the container into an aseptic package.

2. A process according to claim 1, characterized in that the piling up of the product in the container allows simultaneous heating of all product items to steam.

3. A process according to claims 1 or 2, characterized in that the sterilization/pasteurization is with steam or superheated water.

4. A process according to one of claims 1 to 3, characterized in that the cooling under pressure is done by successively cooling with a coolant with a max. temperature gradient of T = 10 °K.

5. A process according to one of claims 1 to 4, characterized in that the direct cooling with sterile coolant water, sterile liquid/gaseous inert gases such as N₂, CO₂, etc. can be in single doses or sequentially.

6. A process according to one of claims 1 to 5, characterized in that the cooling to ≤ 100 °C is under a constant pressure.

7. A process according to one of claims 1 to 6, characterized in that the containers are transferred to the filling station without pressure and aseptically.

8. A process according to one of claims 1 to 7, characterized in that additive such as oil, butter, seasonings, salt or sugar solutions, etc. can be sterilely injected before the product is aseptically poured out.

9. A process according to one of claims 1 to 8, characterized in that the packaging is sterilized directly before the sterilized product is poured into it.

10. A process according to one of claims 1 to 9, characterized in that the necessary sterilization/pasteurization time and/or the cooling time is set according to the speed of the containers or the speed of the filling system.

11. A device to implement the process according to one of claims 1 to 10, characterized by a sorting unit, perhaps an aligning unit, a portioning unit, at least one pressure chamber (3) as the sterilization /pasteurization unit, and a cooling unit with corresponding pressure-tight locks (8, 9) and numerous sealable containers (1) that serve to receive a set amount of the initial product (P), can be held in the pressure chamber (3) and move through the individual units sequentially.

12. A device according to claim 11, characterized in that the units are in a circle (rotary tables) so that the containers (1) are ready to be filled by the portioning unit after they are emptied.

13. A device according to claim 11, characterized in that units are in a row (linear runners), and the containers (1) are returned to the portioning unit after the sterilized/pasteurized product is transferred to the filling station.

14. A device according to one of claims 11 to 13, characterized in that the containers (1) can be filled from one side and emptied from the other side.

15. A device according to claim 14, characterized in that the containers are designed as open baskets (1) made of perforated sheet metal.

16. A device according to claim 15, characterized in that each basket (1) has a floor (12) that can be swung to be opened.

17. A device according to claim 16, characterized in that the floor (12) can be swung along a lengthwise side of the basket (1) and has a U-shaped cross-section to laterally guide the product.

18. A device according to one of claims 14 to 17, characterized in that the dimensions of the container (1) are slightly smaller than the dimensions of the packaging (V).

19. A device according to one of claims 14 to 18, characterized in that the containers (1) expand slightly conically downward.

20. A device according to one of claims 11 to 19, characterized in that the elements (1 and 3) contacted with steam (H₂O) or a coolant have a pressure/temperature monitor.

21. A device according to claim 20, characterized in that the pressure/temperature monitor has a control.

22. A device according to one of claims 11 to 21, characterized by a control loop for an automatic process.

23. A device according to claim 22, characterized in that the aseptic dosing in the filling station is controlled by the aseptic filling machine.

24. A device according to one of claims 11 to 23, characterized in that the container (1) and /or the packaging (V) has a vibrator to make it easier to empty the container (1) into the aseptic packaging (V) .

## Revendications

1. Procédé de stérilisation/pasteurisation d'un produit à base de légumes ou de fruits, comprenant les opérations suivantes se déroulant en cycle continu :
- triage préliminaire et éventuellement alignement des produits de départ,
- division en proportions respectivement prévues pour le conditionnement,
- transfert de chacune des portions individuelles dans un récipient ouvert d'un côté,
- transport du récipient dans une chambre de pressurisation, insufflation de vapeur dans la chambre de pressurisation close à la température de stérilisation souhaitée pendant une durée déterminée permettant la stérilisation/pasteurisation,
- interruption de l'apport de vapeur et maintien de la pression avec de l'air stérile, du gaz protecteur ou de l'eau de refroidissement,
- refroidissement direct et/ou indirect du produit jusqu'à des valeurs ≤ 100 °C, sous pression constante,
- ouverture de la chambre de pressurisation,
- prélèvement du récipient, et
- vidage aseptique du récipient dans un emballage aseptique.

2. Procédé selon la revendication 1, caractérisé en ce que la distribution du produit dans le récipient permet un chauffage simultané de tous les morceaux de produit avec de la vapeur.

3. Procédé selon la revendication 1 ou 2, caractérisé en ce que la stérilisation/pasteurisation se fait avec de la vapeur ou de l'eau surchauffée.

4. Procédé selon l'une des revendications 1 à 3, caractérisé en ce que le refroidissement sous pression s'opère par refroidissements successifs avec un agent de refroidissement avec un gradient de température de T = 10 °K maximum.

5. Procédé selon l'une des revendications 1 à 4, caractérisé en ce que le refroidissement direct peut se faire avec de l'eau de refroidissement stérile, des gaz protecteurs liquides/sous forme gazeuse tels que N₂, CO₂ ou l'équivalent, individuellement ou les uns après les autres.

6. Procédé selon l'une des revendications 1 à 5, caractérisé en ce que le refroidissement jusqu'à ≤ 100 °C a lieu sous une pression égalisée constante.

7. Procédé selon l'une des revendications 1 à 6, caractérisé en ce que le transfert du récipient au poste de remplissage se fait sans pression et en mode aseptique.

8. Procédé selon l'une des revendications 1 à 7, caractérisé en ce que des additifs tels que de l'huile, du beurre, des épices, des solutions salées/sucrées ou l'équivalent peuvent être injectées en atmosphère stérile avant le conditionnement en mode aseptique.

9. Procédé selon l'une des revendications 1 à 8, caractérisé en ce que la stérilisation des emballages a lieu immédiatement avant leur remplissage avec le produit stérilisé.

10. Procédé selon l'une des revendications 1 à 9, caractérisé en ce que le temps de stérilisation/pasteurisation et/ou le temps de refroidissement requis est ajusté en fonction de la vitesse des récipients ou de la vitesse de l'installation de conditionnement.

11. Dispositif pour la mise en oeuvre du procédé selon l'une des revendications 1 à 10, caractérisé par une unité de triage, éventuellement une unité d'alignement, une unité de division en portions, au moins une chambre de pressurisation (3) en tant qu'unité de stérilisation/pasteurisation et unité de refroidissement avec des sas correspondants (8, 9) tenant à la pression, et par une multiplicité de récipients (1) scellables, qui servent à réceptionner une quantité prédéfinie du produit de départ (P), qui peuvent être immobilisés dans la chambre de pressurisation (3) et qui traversent successivement chacune des unités.

12. Dispositif selon la revendication 11, caractérisé en ce que les unités sont agencées en cercle (table tournante) de façon à ce qu'après avoir été vidés, les récipients (1) soient renvoyés à la disposition de l'unité de division en portions, en vue d'un nouveau remplissage.

13. Dispositif selon la revendication 11, caractérisé en ce que les unités sont agencées en une ligne (table longitudinale) et en ce qu'après le transfert du produit stérilisé/pasteurisé au poste de remplissage, les récipients (1) sont réacheminés à l'unité de division en portions.

14. Dispositif selon l'une des revendications 11 à 13, caractérisé en ce que les récipients (1) peuvent être remplis d'un côté et vidés par l'autre côté.

15. Dispositif selon la revendication 14, caractérisé en ce que les récipients sont des paniers (1) en tôle perforée ouverts en partie haute.

16. Dispositif selon la revendication 15, caractérisé en ce que chaque panier (1) présente un fond (12) pivotant en vue de son ouverture.

17. Dispositif selon la revendication 16, caractérisé en ce que le fond (12) pivote sur le panier (1) le long d'un grand côté et présente une section transversale en forme de U permettant un guidage latéral des produits.

18. Dispositif selon l'une des revendications 14 à 17, caractérisé en ce que les dimensions du récipient (1) sont légèrement inférieures aux dimensions de l'emballage (V).

19. Dispositif selon l'une des revendications 14 à 18, caractérisé en ce que les récipients (1) s'élargissent légèrement en cône vers le bas.

20. Dispositif selon l'une des revendications 11 à 19, caractérisé en ce que les éléments (1 resp. 3) pouvant être alimentés respectivement avec de la vapeur (H₂O) ou un agent de refroidissement sont équipés d'un dispositif de contrôle de la pression/température.

21. Dispositif selon la revendication 20, caractérisé en ce que le dispositif de contrôle de la pression/température présente une régulation.

22. Dispositif selon l'une des revendications 11 à 21, caractérisé par un circuit de commande et de réglage assurant un cycle automatique.

23. Dispositif selon la revendication 22, caractérisé en ce que le dosage aseptique dans le poste de conditionnement est contrôlé par la machine de conditionnement aseptique.

24. Dispositif selon l'une des revendications 11 à 23, caractérisé en ce que le récipient (1) et/ou l'emballage (V) est équipé d'un vibreur pour faciliter chaque opération de vidage du récipient (1) dans l'emballage aseptique (V).
